(19) Europäisches Patentamt / European Patent Office / Office européen des brevets

(11) **EP 3 854 561 B1**

(12) **FASCICULE DE BREVET EUROPEEN**

(45) Date de publication et mention
de la délivrance du brevet:
**03.01.2024 Bulletin 2024/01**

(51) Classification Internationale des Brevets (IPC):
**B29C 35/06** (2006.01)   **D04H 1/4209** (2012.01)
**F27B 9/10** (2006.01)

(21) Numéro de dépôt: **21153077.9**

(22) Date de dépôt: **22.01.2021**

(52) Classification Coopérative des Brevets (CPC):
**F27D 7/04; B29C 67/249; D04H 1/4209;
D04H 1/4226; F27B 9/10**

(54) **ÉTUVE DE POLYMÉRISATION POUR MATELAS EN FIBRES MINÉRALES**

POLYMERISATIONSOFEN FÜR MINERALFASERMATTEN

POLYMERISATION OVEN FOR MINERAL FIBRE MATTRESS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.01.2020 FR 2000700**

(43) Date de publication de la demande:
**28.07.2021 Bulletin 2021/30**

(73) Titulaire: **Alfi Technologies
49110 Beaupreau-en-Mauges (FR)**

(72) Inventeur: **LORCERY, Jean-Christophe
49620 MAUGES SUR LOIRE (FR)**

(74) Mandataire: **Ipsilon
Le Centralis
63, avenue du Général Leclerc
92340 Bourg-la-Reine (FR)**

(56) Documents cités:
**EP-A1- 0 000 111        WO-A1-2008/119778
CA-A1- 2 987 089        US-A- 2 338 839
US-A- 2 997 096        US-A- 4 028 051
US-A- 4 263 007        US-A- 4 831 746
US-A1- 2017 234 616**

**Description**

La présente invention concerne une étuve de polymérisation de matelas en fibres minérales comprenant au moins un caisson possédant une première et une deuxième ouvertures de longueurs différentes.

Les matelas en fibres minérales, comme par exemple les matelas en laine de roche ou en laine de verre, sont couramment utilisés pour fabriquer des produits isolants pour les bâtiments.

Actuellement, ces matelas en fibres minérales sont fabriqués par des machines de fibrage qui forment un matelas en fibres minérales qui doit ensuite être calibré puis polymérisé afin de former des produits isolants en fibres minérales de dimensions, densité et surfaçage différents.

US 2017/234616 A1 et CA 2 987 089 A1 divulguent des étuves de polymérisation de matelas en fibres minérales.

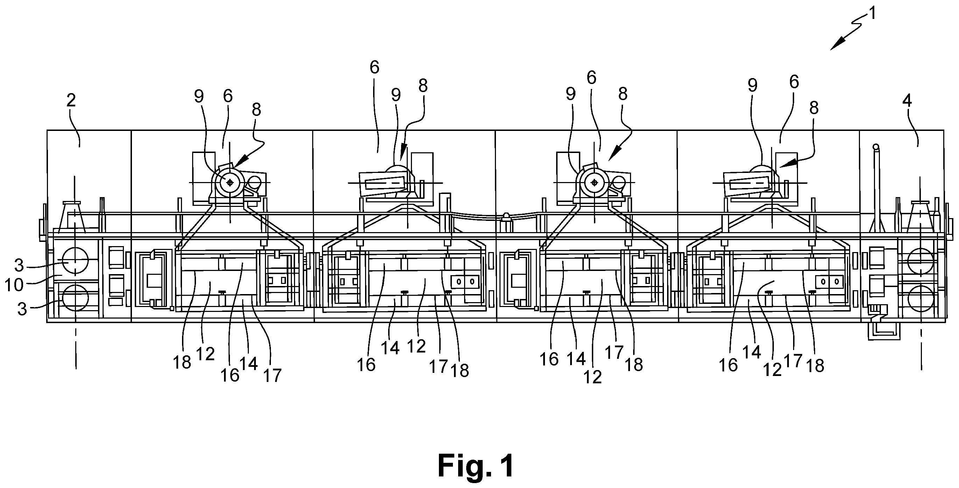

La polymérisation du matelas est réalisée dans une étuve telle que celle représentée sur la figure 1. Le matelas provenant d'une machine de fibrage est transporté de façon continue vers l'étuve 1. L'étuve 1 comporte une zone d'entrée 2 située à gauche de la figure 1 et une zone de sortie 4 située à droite de la figure 1. La zone d'entrée 2 comprend deux arbres de tension 3 espacés d'une distance correspondant à la hauteur souhaitée du matelas 12. En aval des deux arbres de tension 3, l'étuve 1 comprend un premier convoyeur 14 et un deuxième convoyeur 16 placés l'un au-dessus de l'autre et entre lesquels le matelas 12 est calibré et acheminé depuis la zone d'entrée 2 jusqu'à la zone de sortie 4.

Entre la zone d'entrée 2 et la zone de sortie 4, l'étuve 1 comprend quatre zones de chauffage 6 disposées successivement sur le trajet du matelas 12.

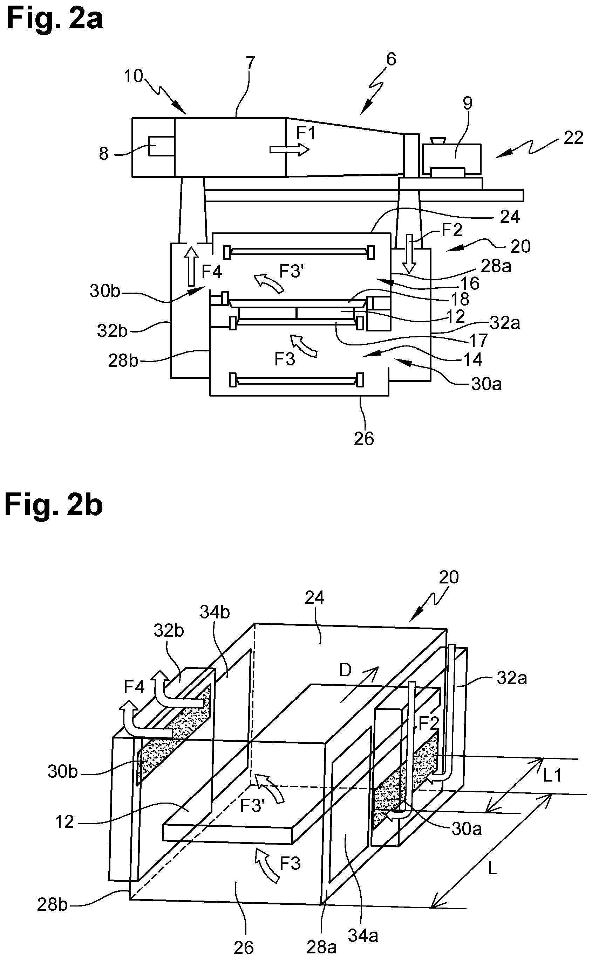

Comme représenté sur les figures 2a et 2b, chaque zone de chauffage 6 comprend un système de chauffage 22 placé au-dessus d'un caisson 20 à l'intérieur duquel le matelas 12 est acheminé.

Le système de chauffage 22 comprend un dispositif de chauffage 8, une chambre de combustion 7 ainsi qu'un ventilateur 9 permettant de faire circuler l'air chaud entre la chambre de combustion 7 et le caisson 20 selon une boucle fermée.

Le caisson 20 comprend un toit 24 et un fond 26 qui s'étendent dans des plans parallèles l'un à l'autre. Le toit 24 et le fond 26 sont reliés par une première paroi latérale 28a et par une deuxième parois latérale 28b, chaque paroi latérale s'étendant selon la direction de déplacement du matelas 12.

La première et la deuxième parois latérales 28a et 28b possèdent respectivement une première ouverture 30a et une deuxième ouverture 30b qui permettent à l'air chaud généré par le système de chauffage 22 de circuler dans le caisson 20 de façon à sécher et polymériser le matelas 12. Une première paroi secondaire 32a et une deuxième paroi secondaire 32b coiffent respectivement la première et la deuxième ouvertures 30a et 30b et ce, à distance de la première et de la deuxième parois latérales 28a et 28b respectivement. La première et la deuxième parois secondaires 32a et 32b permettent de guider le gaz chauffé du système de chauffage 22 vers le caisson 20 puis du caisson 20 vers le système de chauffage 22.

Le matelas 12 placé entre le premier et le deuxième convoyeur 14 et 16 est positionné environ à mi-hauteur entre le fond 24 et le toit 26. La première ouverture 30a est positionnée entre le fond 24 et la hauteur du matelas 12 et la deuxième ouverture 30b est positionnée entre la hauteur du matelas 12 et le toit 24. De cette manière, la circulation d'air entre la première et la deuxième ouvertures 30a et 30b passe par le matelas 12 pour le sécher et le polymériser. Afin de permettre la circulation de l'air au travers du matelas 12, le premier et le deuxième convoyeurs 14 et 16 possèdent respectivement une première structure métallique perforée 17 et une deuxième structure métallique perforée 18.

Lors du fonctionnement de l'étuve 1, le dispositif de chauffage 22 chauffe l'air présent dans la chambre de combustion 7, puis le ventilateur 9 dirige l'air chaud vers la première ouverture 30a selon les flèches F1 puis F2. La première paroi secondaire 32a permet de canaliser et guider l'air chaud vers la première ouverture 30a. Le flux d'air chaud passe ensuite successivement au travers de la première structure perforée 17, du matelas 12 et de la deuxième structure perforée 18 selon les flèches F3 et F3'. L'air chaud passe ensuite par la deuxième ouverture 30b et retourne vers la chambre de combustion 7 selon la flèche F4.

La première et la deuxième paroi latérales 28a et 28b s'étendent sur une longueur L qui est classiquement de 6 à 7 mètres (m). La première et la deuxième ouvertures 30a et 30b s'entendent quant à elles sur une longueur L1 d'environ 70% de la longueur L. De cette manière, sur chacune de la première et de la deuxième paroi latérales 28a et 28b, une porte d'accès 34a et 34b respectivement peut être aménagée. Ces portes d'accès ont notamment pour but de permettre l'accès à une personne, par exemple un opérateur, à l'intérieur du caisson 20 afin qu'elle effectue, par exemple, des opérations de maintenance ou des réparations.

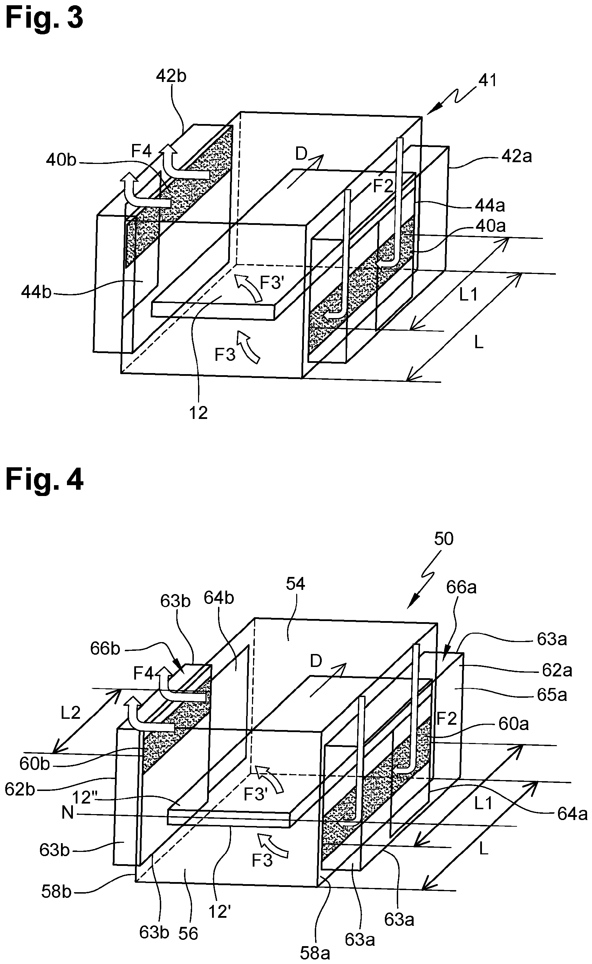

Afin d'optimiser la polymérisation du matelas 12, les caissons 20 ont été modifiés pour aménager des ouvertures s'étendant sur une longueur L1 allant jusqu'à 90% de la longueur L. Un caisson 41 ainsi modifié est représenté sur la figure 3. L'augmentation de la longueur des ouvertures a permis d'augmenter la capacité de polymérisation du caisson de 10%

Dans ce type de caisson 41, des accès 44a et 44b sont aménagés sur la première et la deuxième parois secondaires 42a et 42b respectivement. Une personne souhaitant accéder à l'intérieur du caisson 41 doit alors passer par un des accès 44a ou 44b puis par l'ouverture correspondante 40a ou 40b. L'inconvénient d'un tel caisson 41 est que, comme les ouvertures 40a et 40b ont une hauteur de seulement 45 cm et l'accès à l'intérieur du caisson 41 n'est donc pas aisé. Par ailleurs, cette faible hauteur des ouvertures pose des problèmes de sécurité car elle empêche l'opérateur qui est à l'intérieur du caisson 41 d'évacuer rapidement en cas, par exemple, d'allumage du système de chauffage, du démarrage du ventilateur et/ou de la présence de gaz toxiques à l'intérieur du caisson.

La présente invention a donc pour but de pallier à au moins un des inconvénients des caissons de l'art antérieur en proposant notamment un caisson ayant une capacité de polymérisation optimisée et permettant une maintenance aisée et sécurisée.

Un objet de l'invention concerne une étuve de polymérisation de matelas en fibres minérales comprenant une ou plusieurs zones de chauffage placées les unes à la suite des autres, les dites zones de chauffage étant traversées par un premier et un deuxième convoyeurs parallèles au sol et placés l'un au-dessus de l'autre de manière à former entre eux un espace pouvant accueillir un matelas en fibres minérales, le premier et le deuxième convoyeurs permettant d'acheminer le matelas de façon continue au travers desdites zones de chauffage pour qu'il y soit polymérisé, au moins une des zones de chauffage comportant :

- au moins un système de chauffage de gaz, et
- un caisson comportant un fond et un toit reliés entre eux par une première et une deuxième parois latérales s'étendant chacune sur une longueur L, ledit caisson étant traversé par le premier et le deuxième convoyeurs, la première paroi latérale comprenant au moins une première ouverture allongée s'étendant sur une longueur L1 au moins égale à 80% de la longueur L et la deuxième paroi latérale comprenant au moins une deuxième ouverture allongée s'étendant sur une longueur L2 inférieure à la longueur L1, la première et la deuxième ouvertures allongées permettant la circulation du gaz chaud à l'intérieur du caisson.

La deuxième paroi latérale ayant une ouverture moins longue que l'ouverture de la première paroi latérale, il est possible d'aménager une porte d'accès sur la deuxième paroi latérale. Une telle porte d'accès peut permettre à une personne, par exemple un opérateur, d'entrer aisément dans le caisson pour réaliser des opérations de maintenance ou des réparations, et également de sortir rapidement du caisson en cas de problème de sécurité (mise en route du système de chauffage, présence de gaz toxiques...).

Par ailleurs, la première et la deuxième ouvertures telles que définies permettent une circulation optimisé du gaz chaud à l'intérieur du caisson et donc un meilleur séchage du matelas en fibres minérales. En particulier, ces ouvertures permettent au gaz chaud de circuler de façon homogène sur toute la longueur du caisson. De plus, la vitesse de circulation du gaz chaud peut être équivalente à la vitesse de circulation de gaz dans un caisson de l'art antérieur.

La première et la deuxième ouvertures sont de préférence de forme rectangulaire, dont la longueur est respectivement L1 et L2. La première et la deuxième ouvertures peuvent avoir une hauteur identique ou différente. Selon un mode de réalisation préféré, la première et la deuxième ouvertures ont une hauteur de même dimension pouvant aller de 20 à 80 cm, et de préférence de 40 à 50 cm. Une telle hauteur est suffisamment grande pour permettre le passage des pièces lors des opérations de maintenance mais pas trop grande afin pouvoir minimiser la hauteur de la paroi latérale.

Selon d'autres caractéristiques possibles prises seules ou en combinaison :

- la première ouverture peut permettre l'entrée du gaz chaud dans le caisson et la deuxième ouverture peut permettre la sortie de gaz chaud hors du caisson, de façon à former un flux de gaz chaud à l'intérieur du caisson ; avantageusement, selon ce mode de réalisation, le caisson peut avoir une capacité de polymérisation équivalente à un caisson comprenant deux ouvertures s'étendant sur plus de 80% de la longueur des parois latérales, comme le caisson décrit en référence à la figure 3 ;
- l'espace pouvant accueillir le matelas en fibres minérales peut s'étendre dans un plan positionné à un niveau N à partir du fond, l'une de la première et de la deuxième ouverture pouvant être placée entre le fond et le niveau N, l'autre ouverture étant placée entre le niveau N et le toit ; de cette manière, le flux de gaz chaud qui circule à l'intérieur du caisson entre les deux ouvertures traverse le matelas en fibres minérales afin de le polymériser ;
- la première ouverture peut avoir une longueur L1 au moins égale à 85% de la longueur L de la première paroi latérale ; avantageusement, la première ouverture utilise une grande partie de la longueur de la première paroi latérale afin d'optimiser la circulation de gaz chaud à l'intérieur du caisson ; la porte d'accès à l'intérieur du caisson pouvant être aménagée sur la deuxième paroi latérale, il n'est pas nécessaire d'aménager une porte d'accès sur la première paroi latérale et il est ainsi possible d'utiliser une grande partie de la longueur L de la première paroi latérale pour la première ouverture ; selon un mode de réalisation possible, la première ouverture peut avoir une longueur L1 au moins égale à 90% de la longueur L ; de préférence, la longueur L1 de la première ouverture est d'au plus 95% de la longueur L ;
- la deuxième ouverture peut avoir une longueur L2 au moins égale à 20% de la longueur L de la deuxième paroi latérale ; la longueur réduite de la deuxième ouverture permet d'aménager une porte d'accès sur la deuxième paroi latérale ; selon un mode de réalisation préféré, la longueur L2 de la deuxième ouverture peut être au moins égale à 40% de la longueur L, de préférence au moins égale à 60% de la longueur L ;

- la deuxième ouverture peut avoir une longueur L2 d'au plus 75 % de la longueur L de la deuxième paroi latérale ; de cette manière, il est possible d'aménager une porte d'accès à l'intérieur du caisson sur le deuxième paroi latérale ;

- le caisson peut comprendre en outre une première paroi secondaire extérieure au caisson venant coiffer la première ouverture à distance de la première paroi latérale de manière à ménager un espace pour la circulation du gaz chaud entre le système de chauffage de gaz 22 et la première ouverture ; la première paroi secondaire permet ainsi de concentrer et guider le flux de gaz chaud entre le système de chauffage et la première ouverture ; selon un mode de réalisation possible, la première ouverture peut permettre l'entrée du gaz chaud à l'intérieur du caisson et la première paroi secondaire permet alors de concentrer et guider le flux de gaz chaud vers la première ouverture de manière à ce qu'il n'y ait pas de perte de gaz chaud, par exemple vers l'extérieur du caisson ;

- le caisson peut comprendre en outre une deuxième paroi secondaire extérieure au caisson venant coiffer la deuxième ouverture à distance de la deuxième paroi latérale de manière à ménager un espace pour la circulation de gaz chaud entre le système de chauffage de gaz et la deuxième ouverture ; la deuxième paroi secondaire permet ainsi de concentrer et guider le flux de gaz chaud entre le système de chauffage de gaz et la deuxième ouverture ; selon un mode de réalisation possible, la deuxième ouverture permet la sortie du gaz chaud vers l'extérieur du caisson et la deuxième paroi secondaire permet alors de concentrer et guider le flux de gaz chaud vers le système de chauffage de gaz, et ce, de manière à ce qu'il n'y ait pas de perte de gaz chaud ;

- la deuxième paroi latérale peut comprendre une porte d'accès à l'intérieur du caisson ; la porte d'accès permet à une personne, par exemple un opérateur, de réaliser des opérations de maintenance ou des réparations, et également de sortir rapidement du caisson en cas de problème (mise en route du système de chauffage, présence de gaz toxiques...) ;et

- le premier convoyeur et le deuxième convoyeurs peuvent posséder respectivement une première structure perforée et une deuxième structure perforée permettant la circulation du gaz chaud à travers le premier et le deuxième convoyeurs ; le gaz chaud qui circule à l'intérieur du caisson lors du fonctionnement de l'étuve peut ainsi passer au travers de la structure perforée et au travers du matelas de fibres minérales ; le séchage et la polymérisation du matelas par le gaz chaud sont ainsi optimisés.

## Brève description des dessins

D'autres caractéristiques et avantages apparaîtront au cours de la description qui va suivre, donnée uniquement à titre d'exemple non limitatif et faite en référence aux dessins annexés, sur lesquels :

La figure 1 représente de façon schématique l'intérieur d'une étuve de polymérisation de matelas en fibres minérales.

La figure 2a représente de façon schématique une zone de chauffage de l'étuve de la figure 1 en coupe transversale.

La figure 2b représente de façon schématique une vue de dessus en perspective d'un caisson selon l'art antérieur.

La figure 3 représente de façon schématique une vue de dessus en perspective d'un caisson selon l'art antérieur différent du caisson de la figure 2b.

La figure 4 représente de façon schématique une vue de dessus en perspective d'un caisson selon un premier mode de réalisation de l'invention.

La figure 5a représente un graphique d'une simulation montrant la vitesse de circulation du gaz chaud à l'intérieur d'un caisson selon la figure 2b.

La figure 5b représente un graphique d'une simulation montrant la vitesse de circulation du gaz chaud à l'intérieur d'un caisson selon la figure 3.

La figure 5c représente un graphique d'une simulation montrant la vitesse de circulation du gaz chaud à l'intérieur d'un caisson selon un mode de réalisation de l'invention.

## Description de mode(s) de réalisation

Pour des raisons de clarté, seuls les éléments essentiels pour la compréhension des modes de réalisation exposés ci-après ont été représentés de manière schématique, et ceci sans respect de l'échelle.

Dans la description qui va suivre, les directions et orientations, comme par exemple les termes « dessus », « dessous », « inférieur », « supérieur »..., se réfèrent à une étuve posée sur le sol en position de fonctionnement.

Selon un premier mode de réalisation représenté sur la figure 4, un caisson 50 comprend un toit 54 et un fond 56 qui s'étendent chacun dans un plan horizontal et qui sont reliés entre eux par une première paroi latérale 58a et une deuxième paroi latérale 58b. La première et la deuxième paroi latérales 58a et 58b sont parallèles entre elles et s'étendent chacune sur une longueur L dans un plan vertical.

Le caisson 50 peut être placé dans une zone de chauffage 6 telle que celle représentée sur la figure 2a, cette zone de chauffage 6 faisant partie d'une étuve de polymérisation 1 de matelas en fibres minérales telle que celle représentée sur la figure 1. Ainsi, le caisson 50 est relié à au moins un système de chauffage de gaz 22 (non visible sur la figure 4 et représenté sur la figure 2a) permettant notamment la circulation du gaz chaud à l'intérieur du caisson 50. Sur la figure 2a, le système de chauffage de gaz 22 est placé au-dessus du caisson mais selon une variante de réalisation possible, il peut également être placé sous le caisson.

Le caisson 50 est traversé par un premier et un deuxième convoyeurs tels que les convoyeurs 14 et 16 représentés sur la figure 2a. Le premier et le deuxième convoyeurs 14 et 16 s'étendent chacun selon un plan parallèle au sol et sont placés l'un au-dessus de l'autre de manière à former entre eux un espace pouvant accueillir le matelas 12 en fibres minérales. Le premier et le deuxième convoyeurs permettent ainsi le déplacement du matelas 12 d'un bout à l'autre du caisson selon la direction D. Le matelas 12 s'étend dans un plan positionné à un niveau N à partir du fond 56.

Le premier et le deuxième convoyeurs 14 et 16 comprennent respectivement une première et une deuxième structures perforées 17 et 18 qui sont chacune placées au contact du matelas 12. En particulier, la première structure perforée 17 supporte le matelas 12, et est donc au contact avec une surface inférieure 12' du matelas 12, et la deuxième structure perforée 18 est au contact avec une surface supérieure 12" du matelas 12. La première et la deuxième structures perforées 17 et 18 permettent au gaz circulant dans le caisson de passer au travers de ces structures et donc au travers du matelas afin de le sécher et de le polymériser.

La première paroi latérale 58a comporte une première ouverture 60a s'étendant sur une longueur L1 au moins égale à 80% de la longueur L, de préférence au moins égale à 85% de la longueur L, et de manière encore plus préférée au moins égale à 90% de la longueur L. La longueur L1 est de préférence d'au plus 95% de la longueur L. La première ouverture 60a a ainsi une longueur L1 optimisée permettant la circulation du gaz chaud entre le caisson 50 et le système de chauffage de gaz 22. La longueur L1 est telle qu'il n'est pas possible de ménager une porte d'accès dans la première paroi latérale 58a.

Dans ce mode de réalisation, le caisson 50 a une longueur mesurant 6 m et une hauteur mesurant 4 m. La première ouverture 60a possède alors une longueur mesurant 5,4 m et une hauteur mesurant 0,6 m.

La première ouverture 60a est positionnée en partie basse de la première paroi latérale 58a et notamment entre le fond 56 et le niveau N du matelas 12. Selon un autre mode de réalisation possible, la première ouverture peut être positionnée entre le niveau N et le toit 54.

La première paroi latérale 58a comporte également une première paroi secondaire 62a qui vient coiffer la première ouverture 60a tout en étant à distance de la première paroi latérale 58a. La première paroi secondaire 62a est fixée à la première paroi latérale 58a et s'étend sur une longueur au moins égale à la longueur L1 et de préférence sur une hauteur au moins égale à 80% de la hauteur de la première paroi latérale 58a. La première paroi secondaire 62a a une longueur légèrement plus importante que la longueur L1, par exemple d'au plus 110% de la longueur L1 de manière à pouvoir être fixée autour de la première ouverture 60a.

La première paroi secondaire 62a comporte un panneau vertical 65a et trois bords latéraux 63a s'étendant chacun dans un plan perpendiculaire à la première paroi latérale 58a et au panneau vertical 65a. La première paroi secondaire 62a est ainsi espacée de la première paroi latérale 58a d'une distance comprise entre 40 et 60 cm. La première paroi secondaire 62a est ouverte sur toute sa longueur dans sa partie supérieure 66a de façon à permettre le passage du gaz chaud entre le caisson et le système de chauffage de gaz 22.

Un accès 64a est aménagé dans la première paroi secondaire 62a de façon à permettre un passage vers l'intérieur du caisson 50 en passant par la première ouverture 60a. Cependant, cet accès 64a ne permet pas le passage aisé d'une personne, par exemple un opérateur, à l'intérieur du caisson et ne permet pas non plus une évacuation rapide de cet opérateur en cas de problème à l'intérieur du caisson.

La deuxième paroi latérale 58b comporte une deuxième ouverture 60b s'étendant sur une longueur L2 inférieure à la longueur L1. La longueur L2 est au moins égale à 20% de la longueur L, de préférence au moins égale à 40% de la longueur L, et de manière encore plus préférée au moins égale à 60% de la longueur L. La longueur L2 est de préférence d'au plus 75% de la longueur L. La deuxième ouverture 60b a ainsi une longueur L2 suffisante pour permettre la circulation du gaz chaud entre le caisson et le système de chauffage de gaz 22. Avantageusement, la longueur L2 réduite de la deuxième ouverture 60b permet de ménager une porte d'accès 64b sur la deuxième paroi latérale 58b permettant à une personne, par exemple un opérateur, de pouvoir entrer aisément dans le caisson pour réaliser des réparations et/ou des opérations de maintenance. La porte d'accès 64b permet également à l'opérateur de sortir rapidement du caisson en cas par exemple d'allumage du système de chauffe, de démarrage du ventilateur et/ou de la présence de gaz toxiques à l'intérieur du caisson.

Dans ce mode de réalisation, la deuxième ouverture 60b possède une longueur mesurant 4 m et une hauteur mesurant 0,6 m.

La deuxième ouverture 60b est positionnée sur la partie haute de la deuxième paroi latérale 58b et notamment entre le niveau N du matelas 12 et le toit 54. Selon un autre mode de réalisation possible, la deuxième ouverture peut être positionnée entre le fond 56 et le niveau N. La présence de la première et de la deuxième ouvertures permet la circulation du gaz chaud à l'intérieur du caisson 50 entre ces deux ouvertures. Avantageusement, dans ce mode de réalisation, la première et la deuxième ouvertures 60a et 60b sont placées de part et d'autre du plan du matelas 12. Ainsi, le gaz chaud circulant entre la première et la deuxième ouvertures 60a et 60b traverse le matelas 12 pour le sécher et le polymériser.

La deuxième paroi latérale 58b comporte également une deuxième paroi secondaire 62b qui vient coiffer la deuxième ouverture 60b tout en étant à distance de la deuxième paroi 58b. La deuxième paroi secondaire 62b est fixée à la deuxième paroi latérale 58b et s'étend sur une longueur au moins égale à la longueur L2 et, de préférence, sur une hauteur au moins égale à 80% de la hauteur de la deuxième paroi latérale 58b. La deuxième paroi secondaire 62b a une longueur légèrement plus importante que la longueur L2, par exemple d'au plus 110% de la longueur L2, de façon à pouvoir être fixée autour de la deuxième ouverture 60b et à coiffer cette ouverture 60b tout en laissant suffisamment de place sur la deuxième paroi latérale 58b pour la porte d'accès 64b.

La deuxième paroi secondaire 62b comporte un panneau vertical 65b (non visible) et trois bords latéraux 63b s'étendant chacun dans un plan perpendiculaire à la deuxième paroi latérale 58b et au panneau vertical 65b. La deuxième paroi secondaire 62b est ainsi espacée de la deuxième paroi latérale 58b d'une distance comprise entre 40 et 60 cm. La deuxième paroi secondaire 62b est ouverte sur toute sa longueur dans sa partie supérieure 66b de façon à permettre le passage du gaz chaud entre le caisson 50 et le système de chauffage de gaz 22.

Selon un mode de réalisation préféré, le gaz chaud entre dans le caisson 50 par la première ouverture 60a, ou encore par la plus grande des deux ouvertures, et sort du caisson par la deuxième ouverture 60b, ou encore par la plus petite des deux ouvertures. Ainsi, le gaz chaud provenant du système de chauffage de gaz 22 est canalisé et guidé par la première paroi secondaire 62a puis entre dans le caisson par la première ouverture 60a. Le gaz chaud passe alors à travers les perforations de la première structure métallique perforée 17 puis au travers du matelas pour le sécher et le polymériser. Le gaz chaud passe ensuite au travers des perforations de la deuxième structure métallique perforée 18 puis sort du caisson 50 par la deuxième ouverture 60b pour retourner dans la chambre de combustion 7 du système de chauffage de gaz 22.

Le caisson 50 selon le mode de réalisation qui vient d'être décrit présente une capacité de séchage et de polymérisation optimisée tout en permettant un accès aisé et sécurisé à un opérateur dans le caisson 50.

Selon un deuxième mode de réalisation possible non représenté, la première paroi latérale 58a peut comprendre, en plus de la première ouverture 60a, une troisième ouverture positionnée en partie haute de la paroi latérale 58a. La troisième ouverture est ainsi positionnée entre le niveau N du matelas 12 et le toit 54. De préférence, la première paroi secondaire 62a coiffe la première et la troisième ouvertures.

Selon ce deuxième mode de réalisation, la deuxième paroi latérale 58b peut comprendre, en plus de la deuxième ouverture 60b, une quatrième ouverture positionnée en partie haute de la deuxième paroi latérale 58b. La quatrième ouverture est ainsi positionnée entre le fond 56 et le niveau N du matelas 12. De préférence, la deuxième paroi secondaire 62b coiffe la deuxième et la quatrième ouvertures.

Selon ce deuxième mode de réalisation, deux modes de fonctionnement sont possibles :

- selon un premier mode de fonctionnement, la troisième et la quatrième ouvertures sont fermées au moyen de volets et le gaz chaud entre dans le caisson 50 par la première ouverture 60a pour en ressortir par la deuxième ouverture 60b comme dans le premier mode de réalisation ; et
- selon un deuxième mode de fonctionnement, la première et la deuxième ouvertures sont fermées au moyen de volets et le gaz chaud entre dans le caisson 50 par la troisième ouverture pour en ressortir par la quatrième ouverture.

Selon les deux modes de fonctionnement, le flux de gaz chaud circulant à l'intérieur du caisson 50 traverse le matelas 12 pour le sécher et le polymériser. Par ailleurs, la capacité de chauffage de la zone de chauffage 6 comprenant le caisson 50 est la même selon les deux modes de fonctionnement.

**Exemples de réalisation**

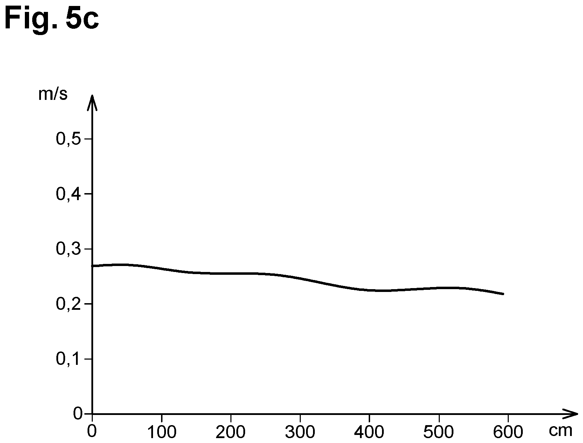

Des simulations MFN (Mécanique des Fluides Numériques) ont été réalisées afin de comparer la capacité de chauffage des caissons 20 et 41 de l'art antérieur avec le caisson 50 selon le premier mode de réalisation de l'invention (Figure 5c).

Dans cette simulation, les paramètres suivant sont considérés :

- un débit de gaz constant de 24000 m³/h entre la première et la deuxième ouverture;
- un caisson d'une longueur de 5,7 m, d'une largeur (distance entre la première et la deuxième parois) de 4,08 m et d'une hauteur de 3,12 m ;
- un matelas de fibres minérales 12 ayant une épaisseur de 150 mm et ayant une perméabilité équivalente à celle d'un matelas de densité

$$\text{moyenne (Kp} = 8\text{x}10^{-10}\, m^2 \text{ pour une densité de } 50\, kg/m^3);$$

- un modèle de turbulence k-epsilon qui donne une description générale de la turbulence au moyen de deux équations de transport (Equation Différentielle Partielle) : une pour l'énergie cinétique turbulente (k) et l'autre pour la dissipation (epsilon) ; et
- un solveur de type « RhoSimpleFoam ».

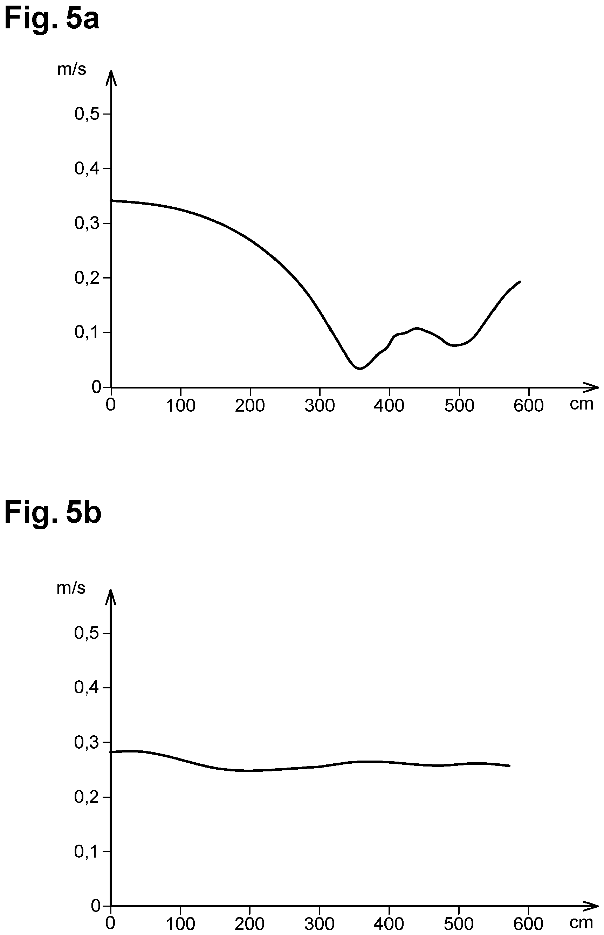

Les figures 5a-c représentent la vitesse de circulation du gaz chaud à l'intérieur du matelas 12 selon son axe longitudinal. Cette vitesse est mesurée sur toute la longueur du caisson, de l'entrée jusqu'à la sortie.

La figure 5a montre que, pour le caisson 20 comprenant une première et une deuxième ouvertures s'étendant chacune sur une longueur de 70% de la longueur L, ces deux ouvertures n'étant pas face à face, la circulation du gaz n'est pas homogène sur toute la longueur du caisson. La vitesse de circulation du gaz chaud est plus importante au niveau de l'entrée du caisson et plus faible au niveau de la sortie.

La Figure 5b montre que lorsque les deux ouvertures sont en face l'une de l'autre et s'étendent sur une longueur de 90% de la longueur L du caisson (comme dans le caisson 41), la vitesse de circulation du gaz chaud est homogène sur toute la longueur du caisson, et donc sur toute la longueur du matelas 12 situé à l'intérieur du caisson 50.

La figure 5c montre que dans le caisson 50 selon le premier mode de réalisation de l'invention qui comprend une première ouverture d'une longueur de 90% de la longueur L et une deuxième ouverture d'une longueur de 70% de la longueur L, le gaz chaud circule de façon homogène sur toute la longueur du caisson 50, et donc sur toute la longueur du matelas 12 situé à l'intérieur du caisson 50. Par ailleurs la vitesse de circulation du gaz dans le caisson 50 est équivalente à la vitesse de circulation du gaz chaud dans le caisson 41 de l'art antérieur. Selon ce premier mode de réalisation, le gaz chaud entre dans le caisson par l'ouverture la plus grande et sort du caisson par l'ouverture la plus petite.

Par conséquent, un caisson selon le premier mode de réalisation de l'invention permet d'obtenir une capacité de chauffage optimisée tout en ayant la possibilité d'aménager une porte d'accès sur la deuxième paroi latérale.

## Revendications

1. Etuve de polymérisation (1) de matelas en fibres minérales (12), **caractérisée en ce qu'**elle comprend une ou plusieurs zones de chauffage (6) placées les unes à la suite des autres, les dites zones de chauffage (6) étant traversées par un premier et un deuxième convoyeurs (14 et 16) parallèles au sol et placés l'un au-dessus de l'autre de manière à former entre eux un espace pouvant accueillir un matelas en fibres minérales (12), le premier et le deuxième convoyeurs (14 et 16) permettant d'acheminer le matelas (12) de façon continue au travers desdites zones de chauffage (6) pour qu'il y soit polymérisé, au moins une des zones de chauffage (6) comportant :

   - au moins un système de chauffage de gaz(22), et
   - un caisson (50) comportant un fond (56) et un toit (54) reliés entre eux par une première et une deuxième parois latérales (58a et 58b) s'étendant chacune sur une longueur L, ledit caisson (50) étant traversé par le premier et le deuxième convoyeurs (14 et 16), la première paroi latérale (58a) comprenant au moins une première ouverture allongée (60a) s'étendant sur une longueur L1 au moins égale à 80% de la longueur L et la deuxième paroi latérale (58b) comprenant au moins une deuxième ouverture allongée (60b) la première et la deuxième ouvertures allongées (60a et 60b) permettant la circulation du gaz chaud à l'intérieur du caisson (50),

   **caractérisé en ce que** la deuxième ouverture allongée (60b) s'étend sur une longueur L2 inférieure à la longueur L1.

2. Etuve de polymérisation selon la revendication 1, **caractérisée en ce que** la première ouverture (60a) permet l'entrée du gaz chaud dans le caisson (50) et **en ce que** la deuxième ouverture (60b) permet la sortie de gaz chaud hors du caisson (50), de façon à former un flux de gaz chaud à l'intérieur du caisson (50).

3. Etuve de polymérisation selon la revendication 1 ou 2, **caractérisée en ce que** l'espace pouvant accueillir le matelas en fibres minérales (12) s'étend dans un plan positionné à un niveau N à partir du fond (56), l'une de la première et de la deuxième ouverture (60a, 60b) étant placée entre le fond (56) et le niveau N, l'autre ouverture (60a, 60b) étant placée entre le niveau N et le toit (54).

4. Etuve de polymérisation selon l'une quelconque des revendications précédentes, **caractérisée en ce que** la première ouverture (60a) a une longueur L1 au moins égale à 85% de la longueur L de la première paroi latérale (58a).

5. Etuve de polymérisation selon l'une quelconque des revendications précédentes, **caractérisée en ce que** la deuxième ouverture (60b) a une longueur L2 au moins égale à 20% de la longueur L de la deuxième paroi latérale (58b).

6. Etuve de polymérisation selon l'une quelconque des revendications précédentes, **caractérisée en ce que** la deuxième ouverture (60b) a une longueur L2 d'au plus 75 % de la longueur L de la deuxième paroi latérale (58b).

7. Etuve de polymérisation selon l'une quelconque des revendications précédentes, **caractérisée en ce que** le caisson (50) comprend en outre une première paroi secondaire (62a) extérieure au caisson (50) venant coiffer la première ouverture (60a) à distance de la première paroi latérale (58a) de manière à ménager un espace pour la circulation du gaz chaud entre le système de chauffage de gaz 22 et la première ouverture (60a)

8. Etuve de polymérisation selon l'une quelconque des revendications précédentes, **caractérisée en ce que** le caisson (50) comprend en outre une deuxième paroi secondaire (62b) extérieure au caisson (50) venant coiffer la deuxième ouverture (60b) à distance de la deuxième paroi latérale (58b) de manière à ménager un espace pour la circulation de gaz chaud entre le système de chauffage de gaz (22) et la deuxième ouverture (60b).

9. Etuve de polymérisation selon l'une quelconque des revendications précédentes, **caractérisée en ce que** la deuxième paroi latérale (58b) comprend une porte (64b) d'accès à l'intérieur du caisson (50).

10. Etuve de polymérisation selon l'une quelconque des revendications précédentes, **caractérisée en ce que** le premier convoyeur (14) et le deuxième convoyeur (16) possèdent respectivement une première structure perforée (17) et une deuxième structure perforée (18) permettant la circulation du gaz chaud à travers le premier et le deuxième convoyeurs (14 et 16).

**Patentansprüche**

1. Polymerisationsofen (1) für Mineralfasermatten (12), **dadurch gekennzeichnet, dass** er einen oder mehrere Heizbereiche (6) umfasst, die nacheinander platziert sind, wobei die Heizbereiche (6) von einem ersten und einem zweiten Förderband (14 und 16) durchquert werden, die parallel zum Boden sind und derart übereinander angeordnet sind, dass zwischen ihnen ein Raum gebildet wird, der eine Mineralfasermatte (12) aufnehmen kann, wobei das erste und das zweite Förderband (14 und 16) gestatten, die Matte (12) kontinuierlich durch die Heizbereiche (6) zu befördern, damit sie polymerisiert wird, wobei mindestens einer der Heizbereiche (6) aufweist:

   - mindestens ein Gasheizsystem (22), und
   - ein Gehäuse (50), das einen Boden (56) und ein Dach (54) aufweist, die durch eine erste und eine zweite Seitenwand (58a und 58b) miteinander verbunden sind, die sich jeweils über eine Länge L erstrecken, wobei das Gehäuse (50) von dem ersten und dem zweiten Förderband (14 und 16) durchquert wird, wobei die erste Seitenwand (58a) mindestens eine erste längliche Öffnung (60a) umfasst, die sich über eine Länge L1, die mindestens gleich 80 % der Länge L ist, erstreckt und die zweite Seitenwand (58b) mindestens eine zweite längliche Öffnung (60b) umfasst, wobei die erste und die zweite längliche Öffnung (60a und 60b) die Zirkulation des heißen Gases im Inneren des Gehäuses (50) gestatten, **dadurch gekennzeichnet, dass** sich die zweite längliche Öffnung (60b) über eine Länge L2, die kleiner als die Länge L1 ist, erstreckt,

2. Polymerisationsofen nach Anspruch 1, **dadurch gekennzeichnet, dass** die erste Öffnung (60a) den Eintritt des heißen Gases in das Gehäuse (50) gestattet und dass die zweite Öffnung (60b) den Austritt des heißen Gases aus dem Gehäuse (50) gestattet, so dass ein Strom heißen Gases im Inneren des Gehäuses (50) gebildet wird.

3. Polymerisationsofen nach Anspruch 1 oder 2, **dadurch gekennzeichnet, dass** sich der Raum, der die Mineralfasermatte (12) aufnehmen kann, in einer Ebene erstreckt, der auf einem Niveau N ab dem Boden (56) positioniert ist, wobei eine von der ersten und von der zweiten Öffnung (60a, 60b) zwischen dem Boden (56) und dem Niveau N platziert ist, wobei die andere Öffnung (60a, 60b) zwischen dem Niveau N und dem Dach (54) platziert ist.

4. Polymerisationsofen nach einem der vorangehenden Ansprüche, **dadurch gekennzeichnet, dass** die erste Öffnung (60a) eine Länge L1 hat, die mindestens gleich 85 % der Länge L der ersten Seitenwand (58a) ist.

5. Polymerisationsofen nach einem der vorangehenden Ansprüche, **dadurch gekennzeichnet, dass** die zweite Öffnung (60b) eine Länge L2 hat, die mindestens gleich 20 % der Länge L der zweiten Seitenwand (58b) ist.

6. Polymerisationsofen nach einem der vorangehenden Ansprüche, **dadurch gekennzeichnet, dass** die zweite Öffnung (60b) eine Länge L2 hat, die höchstens 75 % der Länge L der zweiten Seitenwand (58b) entspricht.

7. Polymerisationsofen nach einem der vorangehenden Ansprüche, **dadurch gekennzeichnet, dass** das Gehäuse (50) ferner eine erste sekundäre Wand (62a) außerhalb des Gehäuses (50) umfasst, die die erste Öffnung (60a) beabstandet von der ersten Seitenwand (58a) derart bedeckt, dass ein Raum für die Zirkulation des heißen Gases zwischen dem Gasheizsystem (22) und der ersten Öffnung (60a) eingerichtet wird.

8. Polymerisationsofen nach einem der vorangehenden Ansprüche, **dadurch gekennzeichnet, dass** das Gehäuse (50) ferner eine zweite sekundäre Wand (62b) außerhalb des Gehäuses (50) umfasst, die die zweite Öffnung (60b) beabstandet von der zweiten Seitenwand (58b) derart bedeckt, dass ein Raum für die Zirkulation von heißem Gas zwischen dem Gasheizsystem (22) und der zweiten Öffnung (60b) eingerichtet wird.

9. Polymerisationsofen nach einem der vorangehenden Ansprüche, **dadurch gekennzeichnet, dass** die zweite Seitenwand (58b) eine Zugangstür (64b) in das Innere des Gehäuses (50) umfasst.

10. Polymerisationsofen nach einem der vorangehenden Ansprüche, **dadurch gekennzeichnet, dass** das erste Förderband (14) und das zweite Förderband (16) jeweils eine erste perforierte Struktur (17) und eine zweite perforierte Struktur (18) besitzen, die die Zirkulation des heißen Gases durch das erste und das zweite Förderband (14 und 16) gestatten.

**Claims**

1. A polymerization oven (1) for mineral fiber mats (12), **characterized in that** same comprises one or a plurality of heating zones (6) placed one after the other, said heating zones (6) being crossed through by first and second conveyors (14 and 16) parallel to the ground and placed one above the other so as to form therebetween a space for accommodating a mineral fiber mat (12), the first and second conveyors (14 and 16) continuously conveying the mat (12) through said heating zones (6) for the mat to be polymerized therein, at least one of the heating zones (6) including:

   - at least one gas heating system (22), and
   - a chamber (50) including a bottom (56) and a roof (54) connected to each other by first and second side walls (58a and 58b) each extending over a length L, said chamber (50) being crossed thorough by the first and second conveyors (14 and 16), the first side wall (58a) comprising at least one first elongated opening (60a) extending along a length L1 at least equal to 80% of the length L and the second side wall (58b) comprising at least one second elongated opening (60b), the first and second elongated openings (60a and 60b) allowing hot gas to circulate inside the chamber (50),

   **characterized in that** the second elongated opening (60b) extends over a length L2 which is shorter than the length L1.

2. The polymerization oven according to claim 1, **characterized in that** the first opening (60a) lets hot gas enter into the chamber (50) and **in that** the second opening (60b) lets hot gas exit from the chamber (50), so as to form a flow of hot gas inside the chamber (50).

3. The polymerization oven according to claim 1 or 2, **characterized in that** the space for accommodating the mineral fiber mat (12) extends in a plane positioned at a level N from the bottom (56), one of the first and second openings (60a, 60b) being placed between the bottom (56) and the level N, the other opening (60a, 60b) being placed between the level N and the roof (54).

4. The polymerization oven according to any one of the preceding claims, **characterized in that** the first opening (60a) has a length L1 at least equal to 85% of the length L of the first side wall (58a).

5. The polymerization oven according to any of the preceding claims, **characterized in that** the second opening (60b) has a length L2 at least equal to 20% of the length L of the second side wall (58b).

6. The polymerization oven according to any of the preceding claims, **characterized in that** the second opening (60b) has a length L2 of at most 75% of the length L of the second side wall (58b).

7. The polymerization oven according to any of the preceding claims, **characterized in that** the chamber (50) further comprises a first secondary wall (62a) external to the chamber (50) covering the first opening (60a) at a distance from the first side wall (58a) so as to provide a space for the circulation of the hot gas between the gas heating system (22) and the first opening (60a).

8. The polymerization oven according to any of the preceding claims, **characterized in that** the chamber (50) further comprises a second secondary wall (62b) external to the chamber (50) covering the second opening (60b) at a distance from the second side wall (58b) so as to provide a space for the circulation of hot gas between the gas heating system (22) and the second opening (60b).

9. The polymerization oven according to any of the preceding claims, **characterized in that** the second side wall (58b) comprises a door (64b) for access to the interior of the chamber (50).

10. The polymerization oven according to any of the preceding claims, **characterized in that** the first conveyor (14) and the second conveyor (16) have a first perforated structure (17) and a second perforated structure (18), respectively, for the circulation of the hot gas through the first and the second conveyors (14 and 16).

**Fig. 1**

# Fig. 2a

# Fig. 2b

# Fig. 3

# Fig. 4

# Fig. 5a

# Fig. 5b

# Fig. 5c

**EP 3 854 561 B1**

## RÉFÉRENCES CITÉES DANS LA DESCRIPTION

### Documents brevets cités dans la description

- US 2017234616 A1

- CA 2987089 A1